Europäisches Patentamt

(19) European Patent Office

Office européen des brevets

(11) Publication number: **0 002 524**

**A2**

(12) # EUROPEAN PATENT APPLICATION

(21) Application number: **78101671.2**

(22) Date of filing: **14.12.78**

(51) Int. Cl.²: **B 01 D 17/04**
**C 02 C 1/38**

(30) Priority: **20.12.77 US 862323**

(43) Date of publication of application:
**27.06.79 Bulletin 79/13**

(84) Designated contracting states:
**BE DE FR GB IT NL SE**

(71) Applicant: **GENERAL ELECTRIC COMPANY**
**1 River Road**
**Schenectady New York(US)**

(72) Inventor: **Arnaiz, John Burton**
**708 Malin Road**
**Newton Square Pennsylvania 19073(US)**

(74) Representative: **Voigt, Reinhard, Dipl.-Ing. et al,**
**Kaiserstrasse 41**
**D-6000 Frankfurt (Main) 1(DE)**

(54) **Random fibrous matrix coalescer.**

(57) A fluid mixture separator comprises a randomly oriented oleophilic fibrous matrix in a housing through which the mixture flows. The matrix uses randomly interspersed long fibers of an oleophilic, non-corrosive material configured to provide a specified means porosity along the flow direction. By way of example, the separator is particularly effective in removing highly emulsified oil from an oil-water mixture.

Fig 1.

EP 0 002 524 A2

Croydon Printing Company Ltd.

## RANDOM FIBROUS MATRIX COALESCER

This invention relates generally to fluid mixture separators, and more particularly to a separator having particular utility for separating a water/oil mixture.

Devices for separating the fluids of a mixture of fluids of different mass densities are used in a wide variety of applications. For example, such devices have particular utility in separating oil from water. Environmental regulations prohibiting the discharge of oily water into oceans, rivers and streams are becoming ever more stringent. Environmental regulations in the U.S. for example prohibit such discharge of water having an oil content greater than 15 parts per million (PPM). Several prior art devices have been developed for separating oil from an oil/water mixture. These include oil/water separators of the gravity type such as coalescing plate separators as well as the in-depth filter type such as those which use disposable paper or fiberglass coalescing matrices. However, these prior art separation devices either fail to meet high separation requirements or suffer other disadvantages which make their use impractical and/or too expensive. Thus, some prior art systems of the gravity type such as those which use coalescing plates are somewhat ineffective in removing highly emulsified oil droplets having a mean diameter of less than 20 microns. Such prior art systems experience difficulty in reaching the present 15 PPM separation requirements when the oil/water mixture to be separated includes a significant quantity of these relatively small droplets. Prior art separation systems of the filter type such as those which use paper or fiberglass coalescing matrices do not operate efficiently when the fluid mixture to be separated has a high dirt content. The dirt therein tends to clog the coalescing elements, reducing the flow rate therethrough and their separation effectiveness. Such prior art separation devices require frequent coalescing element replacement and consequently experience relatively high operating costs when used abroad ships or for other industrial applications in which the oil/water mixture to be separated has a high dirt content.

Accordingly, it is the primary object of the present invention to provide a system for separating the fluids of a mixture of fluids of different mass densities.

It is a further object of the present invention to provide a system which has particular utility in separating highly emulsified oil from an oil/water mixture.

It is a further object of the present invention to provide a system for separating oil from an oil/ water mixture having a high dirt content which is able to operate effectively for a long duration without coalescing element cleansing.

It is a further object of the present invention to provide a system for separating a fluid mixture which utilizes a cleanable and reusable coalescing element.

It is still a further object of this invention to provide a system for separating oil from an oil/ water mixture which may be used in conjunction with other oil/water separation devices.

These and other objects are achieved in the preferred embodiment of this invention in which a system for separating a mixture of fluids of different densities comprises a fibrous matrix in a housing through which the mixture flows. The matrix uses randomly interspersed long fibers of an oleophilic non-corrosive material configured to provide a specified mean porosity along the flow direction.

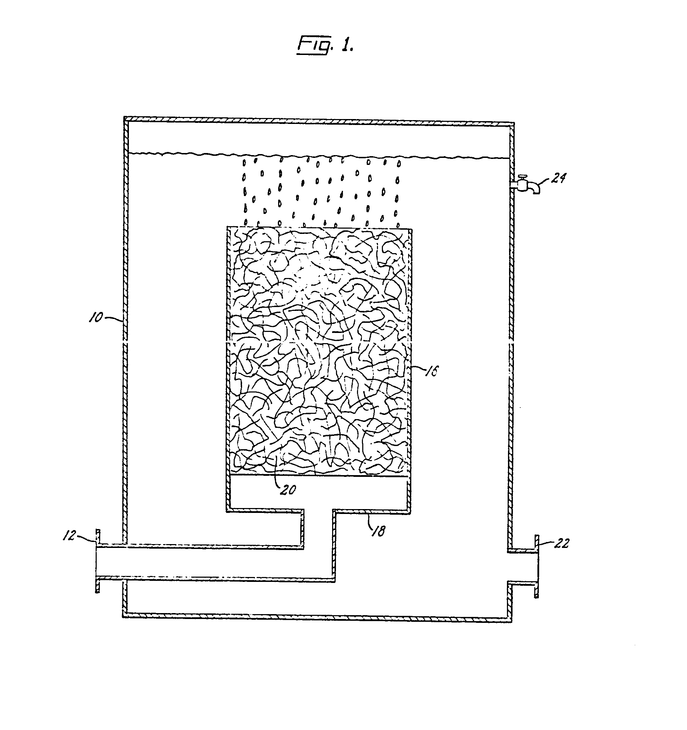

Referring to Fig. 1 therein is shown a schematic diagram of a preferred embodiment for the fibrous matrix separator system of this invention. The system includes a cylindrical housing 10 having an inlet 12 through the lower portion of the housing 10 for receiving the influent mixture. The inlet 12 is in flow communication with the bottom of a cylindrical container 16 disposed within the housing 10. Container 16 is sealed at its lower end by a plate 18, and is opened at its upper end. Disposed within the container 16 is a matrix 20 constructed of randomly interspersed long fibers of an oleophilic material selected to be resistant to corrosion by the components of the influent mixture. The influent received at the inlet 12 is forced under pressure through the container 16 and fibrous matrix 20 and thereafter exits the top of the container 16. The fluid exiting the container 16 flows around the outer wall of the container 16 in the space between the container 16 and housing 10 to the bottom of the housing 10 where the effluent exits through an outlet 22 disposed through lower portion of the housing 10. As the influent mixture flows through the fibrous matrix 20, the lighter droplets within the mixture will migrate under Stokes law in Darcy matrix flow within the matrix 20 due to the difference in densities between the components of the mixture. The migrating droplets intercept and coalesce on the matrix fibers. The coalesced droplets flow under shear along the fiber paths to the top of the container 16 and thereafter stream to the top of the mixture within the cylindrical housing 10 where the lighter component of the mixture may be removed by suctioning or drained through the discharge port 24 or by using a skimming device (not shown).

The fibrous matrix 20 may be manufactured from any non-corrosive, chemically inert material which can be fabricated into long, thin fibers of a specified diameter. This includes all of the metals and plastics which will not be corroded by constituents of the fluid mixture. A preferred material which is useful in separating oil from water is stainless steel wool.

The fibers of the matrix 20 may be randomly interspersed by any known fabrication technique, including knitting or weaving. The fibers are packed to a density within the container 16 to provide a specified means porosity along the flow direction. The flow direction through the matrix 20 while illustrated as vertical may alternatively be in any orientation desired for the particular system. The vertically upward direction of flow is preferred, however, since it assists in the efficient separation of coalesced oil from the fibrous matrix 20 and in its removal from the housing 10.

The coalescent performance of the fibrous matrix 20 has been analytically and experimentally shown to be dependent on the constituents of the influent, the diameter of the fibers used, the matrix porosity, and the time during which the influent mixture is in contact with the matrix 20. Contact time is determined by the mixture flow rate and the length of the matrix 20. Referring to Fig. 2, therein is shown a graph illustrating effluent concentration as a function of the means porosity along the flow direction through a fibrous matrix 20 disposed in a housing 10 constructed in accordance with the teaching of this invention and used to separate an oil/water mixture. In obtaining the graph of the data represented by Fig. 2 an influent containing approximately 1000mg of oil per liter of water was passed through a matrix 20, constructed of fine stainless steel wool mesh. As can be seen by examination of Fig. 2, the lower porosities exhibited the best coalescing performance.

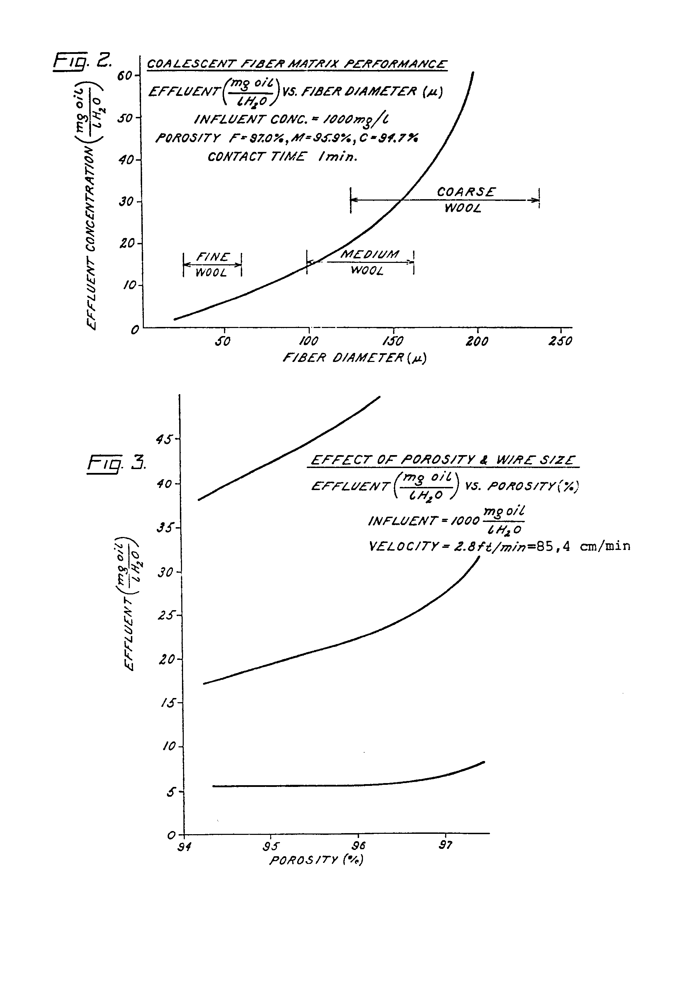

Referring now to Fig. 3 therein is shown a graph illustrating coalescent effectiveness as a function of the diameter of the fibers used to construct the matrix 20. In obtaining the data represented by this graph, the influent concentration was maintained constant at approximately 1,000 milligrams of oil per liter of water, the contact time was maintained nearly constant varying from 97.5% for the fine stainless wool mesh, to 94.7% for the coarse stainless steel wool mesh. As can be seen from the graph of Fig. 3, the fine stainless steel wool mesh was the most effective in coalescing performance. Also, the lower porosities removed the most oil. Thus, it can be seen from the graphs of Figs. 2 and 3 that the exposed surface area of the fibrous material used to construct the matrix 20 is a determining factor in separator performance. However, as the fibers are compressed to a smaller porosity thereby giving more surface area per unit length, the pressure within the container 16 rises much higher reducing the flow rate therethrough. It is therefore desirable to obtain the highest porosity which will provide an effluent having an acceptable level of unseparated material while still maintaining a desired rate of flow and pressure level for the system.

Another characteristic of the fibrous matrix separator of this invention is that an increase in the velocity of the influent causes an increase in the pressure within the container 16 and a concomitant decrease in contact time and coalescent performance. However, where high velocity flow rates are required, the performance of the separator system my be improved by employing a longer matrix 20 to improve its contact time.

Tests run on fibrous matrix separator systems constructed in accordance with the teachings of this invention have demonstrated that separator systems constructed in accordance with the teachings of this invention are effective in producing an effluent containing less than 5 milligrams of oil per liter of water from an influent containing approximately 1000 milligrams of oil per liter of oil with oil droplet sizes less than 10 microns ranging between 5 and 11 milligrams per liter of water using number 0000 stainless steel wool as the matrix fiber. Because of its ability to remove extremely small emulsified oil droplets the separator system of this invention has particular utility as a polishing device. Polishing devices are used in conjuction with other generally larger oil/water separator systems to remove a portion of the oil remaining in the effluent from the larger system. Many such larger systems are ineffective in removing small highly emulsified oil droplets (i.e. those having a means diameter of less than 30 microns).

The separator system of this invention is adaptable to a wide variety of configurations, influent mixture and flow rates. The parameters of the system may be uniquely tailored by proper choice of matrix contact time porosity and fiber size to meet a wide variety of applications.

Another feature of the separator system of this invention is that it maintains a high degree of separation at higher flow rates than can be achieved using a prior art separator exhibiting comparable coalescing performance.

The fibrous matrix separator system disclosed herein has also demonstrated that it is significantly less susceptible to being plugged by particles of dirt entrained in the influent, since many of the finer particles of dirt are passed through the pores in the matrix 20. Another advantage of the separator system disclosed herein is that the matrix 20 may be removed from the container 16, cleaned and reused. The separator system of this invention is also characterized by greater spacial efficiency and a lower pressure drop than is characteristic of systems of the prior art.

Various changes could be made in the embodiment shown in Fig. 1 without departing from the scope of the invention.  Thus, while the matrix 20 has been depicted as being placed within a cylindrical container 16 within a cylindrical housing 10 it is also possible to devise other structures for housing the matrix 20 as well as to use other shapes for the matrix 20.

Thus, having described a preferred embodiment of the invention, though not exhaustive of all possible equivalents, what is desired to be secured by letters patent is claimed below.

Claims:

1. A system for separating components of different densities in a fluid mixture or emulsion characterized by

   (a) a matrix (20) for receiving said fluid mixture and separating the less dense fluid component thereof from the more dense fluid component said matrix comprising a plurality of randomly oriented oleophilic fibers through which the mixture flows, said fibers being configured to provide a predetermined means porosity in the direction of flow of the mixture therethrough whereby the less dense components of the mixture flowing through the matrix coalesce on the fibers and then flow under shear along the fibers to the top of the matrix and thereafter exit the matrix,

   (b) first discharge means (24) for receiving the separated less dense fluid component exiting the matrix and

   (c) second discharge means (22) for receiving the more dense fluid component of the mixture exiting the matrix means.

2. The system of claim 1 where said fibers are made of a material which is resistant to corrosion by components of the mixture.

3. The system of claim 2 wherein said fibers are made from a plastic.

4. The system of claim 2 wherein said fibers are made from an inert metal.

5. The system of claim 4 wherein said fibers are made of stainless steel wool.

6. The system of claim 4 wherein the components of the fluid mixture include water and oil highly emulsified in the water.

7. The separator system of claim 1 further comprising:

   (a) a housing (10) having the matrix (20) disposed therein,

   (b) inlet means (12) through the housing for transmitting the mixture to the bottom of the matrix whereby the fluid mixture entering the housing flows vertically upward through the matrix and is thereafter discharged into the housing.

8. The separation system of claim 7 wherein:

   (a) the first discharge means (24) comprises a first port through said housing, and

   (b) the second discharge means (22) comprises a second port through said housing below said first port.

9. The separation system of claim 8 wherein the housing (10) is sealed at its upper and lower ends to create a pressure vessel.

10. The separation system of claim 8 wherein the housing (10) is sealed at its lower end and open at its upper end.

Fig. 1.

0002524

Fig. 2.

COALESCENT FIBER MATRIX PERFORMANCE

EFFLUENT $\left(\frac{mg\ oil}{l\ H_2O}\right)$ VS. FIBER DIAMETER $(\mu)$

INFLUENT CONC. = 1000 mg/l

POROSITY F = 97.0%, M = 95.9%, C = 94.7%

CONTACT TIME 1 min.

COARSE WOOL

FINE WOOL

MEDIUM WOOL

EFFLUENT CONCENTRATION $\left(\frac{mg\ oil}{l\ H_2O}\right)$

FIBER DIAMETER $(\mu)$

Fig. 3.

EFFECT OF POROSITY & WIRE SIZE

EFFLUENT $\left(\frac{mg\ oil}{l\ H_2O}\right)$ VS. POROSITY (%)

INFLUENT = 1000 $\frac{mg\ oil}{l\ H_2O}$

VELOCITY = 2.8 ft/min = 85,4 cm/min

EFFLUENT $\left(\frac{mg\ oil}{l\ H_2O}\right)$

POROSITY (%)